(19) Europäisches Patentamt
European Patent Office
Office européen des brevets

(11) Publication number: **0 209 337 B1**

(12) # EUROPEAN PATENT SPECIFICATION

(45) Date of publication of patent specification: **06.03.91 Bulletin 91/10**

(51) Int. Cl.$^5$: **C09J 133/08**, C08F 2/30, C09J 7/02

(21) Application number: **86305367.4**

(22) Date of filing: **14.07.86**

(54) **Adhesives.**

(30) Priority: **13.07.85 GB 8517743**

(43) Date of publication of application: **21.01.87 Bulletin 87/04**

(45) Publication of the grant of the patent: **06.03.91 Bulletin 91/10**

(84) Designated Contracting States: **BE CH DE FR GB IT LI NL SE**

(56) References cited:
**FR-A- 2 224 536**
**US-A- 3 691 140**

(73) Proprietor: **Smith & McLaurin Ltd.**
**Cartside Mills**
**Millikenpark Renfrewshire PA10 2AF (GB)**

(72) Inventor: **Thomson, Eric**
**Dunarden Horsewood Road Bridge of Weir**
**Renfrewshire Scotland (GB)**
Inventor: **Parks, Elizabeth**
**16 Freeland Crescent Pollock**
**Glasgow Scotland (GB)**
Inventor: **Allan, Kenneth**
**22 Stamperland Gardens Clarkston**
**Glasgow Scotland (GB)**

(74) Representative: **Arthur, John William et al**
**FITZPATRICKS 4 West Regent Street**
**Glasgow G2 1RS Scotland (GB)**

**EP 0 209 337 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to adhesives which include in their make-up tacky microspheres.

The manufacture of inherently tacky microspheres by aqueous suspension techniques is disclosed in U.S. Patent Nos. 3, 691, 140 and 4, 166, 152 and their use in providing repeatedly re-usable pressure sensitive adhesive coated sheets is disclosed in U.K. Patent No. 1, 457, 923. These sheets are coated with microspheres and a binder material which, when dried, forms sockets in which the microspheres fit and in which they are held by mechanical forces making it more difficult to release the microspheres by lift-off. The binder material is inert towards the microspheres. After ageing or with the application of pressure, a proportion of the microspheres can be transferred off the sheet, either to the back of the substrate on which they were coated in the case of a rolled material or to the material to which the coated sheet is subsequently adhered (adherend). "Substrate" as used herein refers to a carrier or support material to which the adhesive is applied, e.g. paper, polythene or PVC film.

There are certain adhesive uses to which the microspheres could be put if it were not for this drawback of transfer.

Apart from these microspheres, there is a wide range of conventional removable pressure sensitive adhesives which are deposited as a film. These conventional removable pressure sensitives have tack, peel and shear values in the range indicated in Table 2 and are available coated on a range of face sheets with the adhesive protected by silicone release paper. Such an adhesive would be deposited from solvent solution, deposited from aqueous emulsion, formed as a hot melt film, formed as a radiation cured film or formed as a combination of these methods. In each case, the objective is to formulate an adhesive which gives excellent adhesion to a wide range of surfaces but which can be removed even after a considerable period of time without leaving any adhesive behind on the surface. With a coherent adhesive film, this is a very difficult objective to achieve. Normally, the softer the film the better the adhesion, but the more liable it is to split on removal, particularly after ageing, and the harder the film the better the resistance to splitting on removal, but the poorer the tack or adhesion.

Also, adhesive films which are soft enough to give reasonable initial adhesion show an increase in adhesion with time so that after ageing they are much more difficult to remove than immediately after application. This is presumably due to the tendency of the polymer film to wet out the surface over a period of time after application. This applies particularly to acrylic polymers.

The use of a microsphere based adhesive would seem to have the potential to overcome many of the disadvantages of a film based adhesive when used as a removable provided the problem of transfer can be overcome.

Firstly, since the polymer is formed in spheres its tendency to stay in this shape means it can be made softer than a comparable film before the spheres split apart on peeling away from a substrate, particularly if a high angle of peel is used.

Secondly, the tendency of the polymer to return to its spherical shape could be balanced against its tendency to wet out the substrate so that if microspheres of the optimum softness are used, then there should be significantly less increase in adhesion with time.

Thirdly, where a removable adhesive is required to be applied to a surface and removed more than once, a film based adhesive quickly loses adhesiveness, which is possibly due to contamination of the surface of the adhesive film by low molecular weight interfacial contaminants. In the case of a microsphere based adhesive, it is thought that there is a self-cleaning effect ; when the microsphere is squeezed against a surface it tends to push surface contamination aside to be trapped between the spheres or within the spheres and when the adhesive is removed and reapplied, the microsphere can still present a relatively uncontaminated surface to the surface.

Microsphere adhesives as described in the prior art have been assessed as removable pressure sensitives. Optimum adhesive properties were found at a coating weight of about 15 gsm. This coincides with a monolayer of the microspheres when the average microsphere diameter is about 30 to 50 microns. Evidence for this is shown in Table 1.

TABLE 1

| Adhesive Coat Weight: | 7 gsm | 11 gsm | 15 gsm | 19 gsm |
|---|---|---|---|---|
| Loop Tack (Newtons): | 0.2 | 0.35 | 0.4 | 0.5 |
| Shear (Newtons): | 13 | 24 | 34 | 30 |
| Peel to Glass (N'tons): | 0.65 | 1.2 | 1.8 | 2.0 |
| Repetitive Tack: | Increase | | Optimum | Decrease |
| Finger Rub-off: | Increasingly Difficult | | Optimum | Less Difficult |

The test methods used are described in Appendix 1.

Table 2 shows the properties of a conventional-type microsphere based adhesive with a 15 gsm coat weight, and the same properties for a standard commercial removable adhesive (Rivatac ® R211) where the adhesive layer is a coherent film (or layer).

The monomer composition of the conventional microspheres was 90% 2-ethyl-hexyl acrylate and 10% butyl acrylate.

**TABLE 2**

| TEST | | COMMERCIAL REMOVABLE - RIVATAC R211 | CONVENTIONAL MICROSPHERE REMOVABLE |
|---|---|---|---|
| Adhesive Coating Weight (gsm): | | 17 | 15 |
| Loop Tack (Newtons): | | 0.5 | 0.4 |
| Shear (Newtons): | | 60 | 34 |
| Peel from Glass: | | | |
| (Newtons) | 10 min: | 1.3 | * 1.8 ( 25%) |
| | 1 day: | 5.0 | 1.5 (25-30%) |
| | 1 week: | 6.0 | 0.8 (50%) |
| | 1 month: | 12.0 | 0.3 (50%) |
| Peel from Polypropylene Film: | | | |
| (Newtons) | 10 min: | 3.5 | * 0.4 (25-50%) |
| | 1 day: | 4.7 | 0.5 (25-50%) |
| | 1 week: | 7.0 | 1.0 (25-50%) |
| | 1 month: | 9.0 | 1.2 (25-50%) |
| Ease of Finger Rub-off: | | Moderate | Easy |
| Transfer under Pressure: | | Fibre Tear | Fibre Tear |

* Amount of adhesive transfer shown in brackets.

The test methods used are described in Appendix 1.

The pressure transfer test is designed to give a measure of the possibility of some adhesive transferring after ageing to the surface to which the adhesive coated substrate has been applied.

As expected, the microsphere adhesive gives less increase in adhesion with time than the standard removable. In fact, the peel values on glass show a decreasing trend. This is due to the microspheres being left behind on the plate during peel-back. This adhesive transfer becomes more apparent with increased ageing. In the case of peel to polypropylene film, initial values are low due to high adhesive transfer after only 10 minutes ageing. Also, the microspheres can be easily rubbed from the substrate with the finger and the pressure transfer test shows a poor result. In addition, the shear value is low, which is probably related to the ease of rub-off, i.e. the ease with which the microspheres can be rolled along the surface of the substrate.

In short, if the microspheres could be more firmly anchored to the sheet to which the adhesive is applied, then an excellent removable pressure sensitive adhesive would result.

If the microspheres in a microsphere adhesive layer could be anchored to the substrate so well that it is impossible to remove them, such an adhesive coated material could be used for other, more demanding applications. One example would be an adhesive coated paper or film for the protection of delicate surfaces during handling, transport, etc. Another example would be as the adhesive layer for a "backingless" pressure sensitive product. In this case, the face stock would have to be chosen carefully with regard to strength in order to avoid distortion or rupture, and the printing ink would also have to be chosen carefully so that there was no possibility of the adhesive pulling it away from the surface of the face stock.

A further example would be use as a medical adhesive where the high porosity of the microsphere layer would be an advantage provided the microspheres remain firmly attached to the substrate on peel-off.

Microspheres are made in aqueous suspension and a typical solids content would be 25%. When the aqueous suspension is used as an adhesive to coat a substrate, the high amount of water present can give rise to several problems.

The first is low viscosity. The relatively low viscosity of the suspension can be unsuitable for some application techniques for adhesives. If thickening agents are added, these can detract from the tack of the dried microspheres.

The second problem is paper distortion. Where the microsphere adhesive is applied direct to paper, the high water content can cause distortion or curl or cockling of the paper substrate. This problem is particularly difficult to cope with when the substrate is only partially coated, for example, with a strip coated pattern, of adhesive.

Thirdly, the high water content means slow drying and consequently low running speeds during adhesive coating.

The problems described above can be overcome in at least three ways. One is to separate the microspheres from water and redisperse them in solvent ; this is expensive and time consuming. Another method is to remove some of the water from the suspension by concentration techniques, but this is complex and expensive. The preferred route would be to prepare the microspheres at higher solids content.

An object of the present invention is to obviate or mitigate the aforesaid disadvantages.

According to this invention there are provided infusible, solvent-insoluble, solvent-dispersible, inherently tacky, elastomeric polymeric microspheres having a composition formed from non-ionic monomers alone or together with a proportion of ionic comonomers characterised in that said composition additionally comprises an agent which remains unreacted during polymerization to form the microspheres and is available for subsequent use in binding the polymerized microspheres through electrostatic interaction or chemical bonding with a substrate or with a suitable binder applied to said substrate wherein the agent is a monomer of the formula $CH_2 = CR^1R^2$ wherein $R^1$ is hydrogen or $-CO(CH_2)n-NH_2$ in which n may be O or a positive whole number and $R^2$ is a substituted or unsubstituted heterocyclic group containing a quaternizable nitrogen ;

The adhesive of this invention may include an ionic monomer selected to improve adhesion and reproducibility.

Thus, the present invention provides an adhesive which comprises a main monomer, an ionic monomer and an adhesion promoting monomer, the nature and function of each of which will now be described in more detail.

1. Main Monomer

The main proportion of the monomer is chosen to give the adhesive properties of the microspheres. This choice is made in the conventional way, choosing according to Tg, molecular weight, chemical nature,

etc. in order to give microspheres of the required softness and "adhesive nature" i. e. of high tack. Alkyl acrylate or methacrylate esters are preferred.

2. Ionic Monomer

A small proportion of ionic monomer may be added. The purpose of this is to help control the particle size and the stability of the microsphere system, giving improved reproducibility. There is also evidence that the ionic monomer improves adhesion of the microsphere adhesive to the adherend probably by electrostatic interaction.

The following ionic monomers have been found to be effective :

(a) N-(3-sulphopropyl)-N-methacroylamidopropyl-N,N-dimethyl ammonium betaine (SPP).

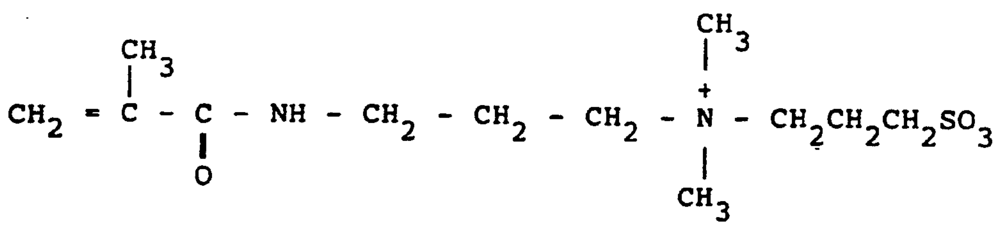

(b) 1-(3-sulphopropyl)-2-vinyl-pyridinium betaine (SPV).

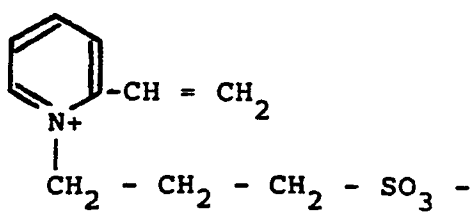

(c) Sodium styrene sulphonate (SSS).

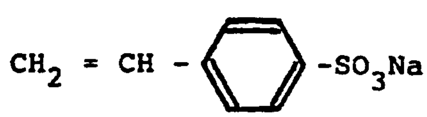

In all cases, the effective addition has been in the range of 0.5 to 5% of total monomer content.

3. Adhesion Promoting Monomers

The incorporation of this monomer or monomers actively promotes adhesion of the microspheres to the substrate and/or the binder. The binder is a film forming material which may or may not be incorporated in the adhesive system with the microspheres. It helps adhesion of the microsphere to the substrate by providing "sockets" which hold the microspheres mechanically and make it more difficult for the microspheres to be removed.

Adhesion promoting monomers can be conveniently considered as falling into two categories :

(a) Monomers which Lead to Synergistic Interaction

This is a choice of monomer which leads to the generation of chemical or electrostatic interaction between the microsphere and the substrate and/or binder. Monomers in this category tested so far have been found to have the structural formula : $CH_2 = CHR$ wherein R is a heterocyclic nitrogen-containing group where the nitrogen is capable of quaternization, particularly if the nitrogen is sterically unhindered, such as

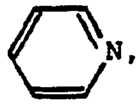, 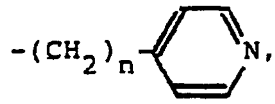, 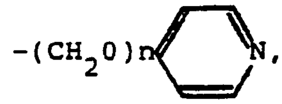, 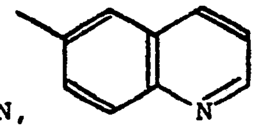

Extensive work has been done with vinyl pyridine. The maximum level of this monomer which can be incorporated into the microspheres stabilized with Perlankrol ® SN is of the order of 0.7%. The adhesion of the microspheres to the substrate increases with the vinyl pyridine content up to the maximum level.

This is shown by the results in Table 3.

TABLE 3

| Amount of vinyl pyridine: | 0 | 0.5% | 0.6% | 0.72% |
|---|---|---|---|---|
| **7 gsm Adhesive Coat Weight** | | | | |
| Shear (Newtons): | 13 | 21 | 26 | 36 |
| 180° Peel from Glass (Newtons): | 0.65 (25%) | 0.8 (<15%) | 0.9 (<10%) | 1.2 (0%) |
| Repetitive Tack (Units): | 37 | 56 | 79 | 81 |
| Ease of Finger Rub-off: | Easy | Moderate | | Difficult |
| Pressure Transfer: | Fibre Tear | 80% | | 40% |
| **15 gsm Adhesive Coat Weight** | | | | |
| Shear (Newtons): | 34 | 37 | 40 | 50 |
| 180° Peel from Glass (Newtons): | 1.8(25%) | 2.0( 15%) | 2.1 ( 10%) | 2.5 (0%) |
| Repetitive Tack (Units): | 77 | 80 | 84 | 99 |
| Ease of Finger Rub-off: | Easy | Moderate | | Difficult |
| Pressure Transfer: | Fibre Tear | 80% | | 40% |

The increasing addition of the adhesion promoting vinyl pyridine eliminates adhesive transfer on peeling from glass. These results also show that in addition to the improved adhesion to the substrate the increasing level of vinyl pyridine provides a very noticeable improvement in adhesive properties, particularly tack and peel.

Monomers such as

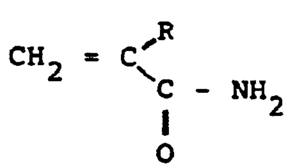 and 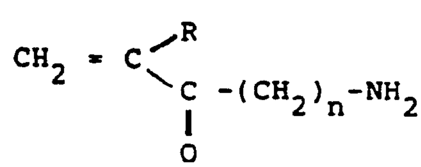

also seem to be effective in improving the binding.

(b) Monomers which are Chemically Cross-linkable

Here, the monomer incorporates into the microsphere potential sites which can be used to promote thermally or radiation activated cross-linking with the substrate and/or binder.

One method is by ring-opening. For example, the incorporation of a pendant epoxy containing group

in the monomer and the use of an amine or radiation as the cross-linking agent or vice versa.

Another method is the incorporation of carboxyl or hydroxyl groups in the microsphere and the use of an ionizing agent in the substrate and/or binder or as an additive in the dispersed phase. For example, the incorporation of acrylic acid in the microsphere and the use of a pre-coat on the substrate of ammonium zirconium carbonate as the cross-linking agent.

EXAMPLE 1

To a three litre resin flask was charged 522.5 g of water and 30 g of Perlankrol ® SN, constituting the aqueous phase. The monomer phase was prepared in two stages, then combined.

1. 7.5 g of SPV was dissolved in 27.5 ml of equal proportions of ethanol/toluene cosolvent.
2. 0.68 g of benzoyl peroxide was dissolved in 127.17 g of 2-ethyl hexyl acrylate, 14.25 g of methyl methacrylate and 1.08 g of 4-vinyl pyridine.

The combined monomer phase was then charged to the vessel. This was sealed with a three-fingered flange and fitted with a mechanical stirrer, reflux condenser and nitrogen inlet tube. The suspension was stirred vigorously whilst being purged with nitrogen for 20 minutes. The mixture was then raised to 70°C under a blanket of nitrogen and kept at these conditions for 20 hours.

At the end of the reaction time, the suspension was cooled to 20°C and filtered to remove any agglomerates. The suspension was then coated onto paper at a dry coat weight of 7 gsm and also 15 gsm, giving the test results shown in Table 4.

Comparative Example 1A

The procedure outlined in Example 1 was repeated, except that the vinyl pyridine monomer was omitted.

Comparative Example 1B

The procedure in Example 1 was repeated, except that vinyl pyridine and SPV monomers were omitted and the adhesive was only coated onto paper at 15 gsm.

EXAMPLE 2

To the aqueous suspension of microspheres prepared as outlined in Example 1 was added 10% wet weight of an ethylene vinyl acetate copolymer (Vinamul ® 3265 which is a 25% solid polymer emulsion manufactured by Vinyl Products). The mixture was coated on paper at a coating weight of 15 gsm.

EXAMPLE 3

To the aqueous suspension of microspheres prepared as outlined in Example 1 was added 2.2% wet weight of a 25% suspension in water of diphenylmethane bis-4, 4-N, N-diethyleneurea. This mixture was coated onto paper at a dry coat weight of 15 gsm.

EXAMPLE 4

The aqueous suspension of microspheres prepared as outlined in Example 1 was coated onto PVC film at a dry coating weight of 15 gsm. The test results are shown in Table 5.

EXAMPLE 4A

The aqueous suspension of microspheres prepared as outlined in Example 1A was coated onto PVC film at a dry coating weight of 15 gsm. The test results are shown in Table 5.

EXAMPLE 5

The aqueous suspension of microspheres prepared as outlined in Example 1 was coated onto polypropylene film at a dry coating weight of 15 gsm. The test results are shown in Table 6.

EXAMPLE 5A

The aqueous suspension of microspheres prepared as outlined in Example 1A was coated onto polypropylene film at a dry coating weight of 15 gsm. The test results are shown in Table 6.

The use of an adhesion promoting monomer such as vinyl pyridine gives much better adhesion to the substrate than the use of a binder without an adhesion promoting monomer in the microspheres. The use of a binder in conjunction with microspheres containing an adhesion promoting monomer improves the adhesion to the substrate even further although the presence of the binder reduces slightly the adhesive properties (Table 4, Example 1 versus Example 2).

The use of a cross-linking agent in conjunction with an adhesive promoting monomer but without the use of a binder can give better adhesion of the microspheres to the substrate, although the adhesive properties can drop slightly (Table 4, Example 1 versus Example 3).

EXAMPLE 6

The suspension polymerisation procedure described in Example 1 was repeated, except that polymer A, a specialised polyvinyl alcohol derivative supplied by Honeywill & Stein Limited, was used as the stabilizer instead of Perlankrol ® SN at a level of 4% dry weight on monomer and the methyl methacrylate monomer was removed altogether.

The formulation was :

| COMPONENT | WET WEIGHT (g) | |
|---|---|---|
| Polymer A (5% solution): | 334 | ) |
| Water: | 166 | )to be Aqueous Phase |
| SPV: | 21 | ) |
| Ethanol: | 27.4 | )to be Monomer Phase 1 |
| Toluene: | 27.4 | ) |
| 2-Ethylhexyl Acrylate: | 394 | ) |
| Benzoyl Peroxide: | 1.4 | )to be Monomer Phase 2 |
| Vinyl Pyridine: | 3 | ) |

The resultant polymer has an average particle size of 45 microns and a solids content of 46.2%. The adhesive properties are given in Table 4.

Microsphere suspensions stabilized with polymer A have also been made at 45% solids using combinations of the following monomers : 2-ethyl hexyl acrylate, vinyl pyridine, n-butyl acrylate, n-butyl methacrylate, methyl methacrylate and other less common esters of acrylic acid and methacrylic acid.

EXAMPLE 7

To the aqueous suspension of microspheres prepared in Example 6 a binder, Coltac F3, (a carboxylated polymer) supplied by Allied Colloids Limited, was added at 10% weight to weight. This suspension was coated at 7 gsm and subjected to the 24 hour transfer test. The results are shown in Table 7.

EXAMPLE 8

To the aqueous suspension of microspheres and binder described in Example 7, a cross-linking agent, Bacote ® 20 (ammonium zirconium carbonate) supplied by Magnesium Electron Limited, was added at 0.5% weight to weight and the suspension was then treated as in Example 7.

EXAMPLE 9

To the aqueous suspension of microspheres prepared in Example 6, concentrated hydrochloric acid was added at 2.5% weight to weight. This was coated at 7 gsm coat weight on paper previously coated with the cross-linking agent Xama ® 2 (an aziridine chemical supplied by Cordova Chemicals, Inc) at 3 gsm coat weight. The sheet was subjected to the 24 hour transfer test and the results are shown in Table 7.

The use of a non-ionic stabilizer such as polymer A can allow the preparation of a dispersion of microspheres with acceptable adhesive properties at solids contents as high as 47% (Example 6).

The use of a carboxylated binder with the microspheres containing an adhesion promoting monomer increases adhesion more than a binder containing no carboxyl groups (Example 2 versus Example 7).

The use of a cross-linking agent such as ammonium zirconium carbonate with adhesion promoting monomer containing microspheres and a carboxylated binder gives better microsphere adhesion than the same binder alone (Example 7 versus Example 8).

Xama ® 2 is an unactivated aziridine cross-linker. It is activated by acid. Example 9 illustrates how the aziridine can be precoated onto the substrate and activated by adding acid to the microsphere suspension which is subsequently applied, thus giving excellent adhesion without the use of a binder.

EXAMPLE 10

This example describes the manufacture of stationery notepads which have a strip of adhesive along one edge and may be used to stick temporarily to most surfaces.

A precoat mix is made by dissolving 10 kg of a low molecular weight copolymer of vinyl chloride and vinyl acetate in 22 kg of toluene. 10 kg of zinc ozide and 5 kg of E334 (a solution polymer supplied by D.S.M. Resins BV) ... are dissolved in 22 kg of toluene. The two suspensions are then mixed together and Meyer bar coated onto a roll of paper in the form of strips around 90 mm width. The toluene is driven off by heat and the roll rewound. The coat weight of this precoat is approximately 3 gsm.

A microsphere disperson of the type described in the previous examples is then coated in the centre of the precoat strip at a width of around 60 mm. The water is evaporated off and the roll rewound, slit, sheeted and guillotined to produce pads containing 50 sheets. The coat weight of the microsphere adhesive is 7 gsm.

APPENDIX 1

TEST METHODS

(a) 180° Peel (to named adherends) - FINAT Stardard Test Method No.1

Test Equipment

Tensile tester capable of peeling a laminate through an angle of 180° with a jaw separation rate of 300 mm/min.

1 standard FINAT roller.

Test Pieces

Sample strips of 25 mm width and minimum length of 175 mm in the machine direction.

Test Conditions

23°C. ± 2°C. and 50% RH ± 5% RH for not less than 4 hours.

Procedure

The adhesive side of the sample was placed onto a clean test plate using light finger pressure then rolled twice in each direction with the standard FINAT roller. The plate was left for 20 minutes before testing commenced.

(b) Loop Tack (to glass) - FINAT Standard Test Method No. 9

Test Equipment

Tensile tester with reversing facility and vertical jaw separation rate of 300 mm/min.
A flat glass plate measuring 25 ± 0.5 mm × 2.0 mm × minimum thickness 3.0 mm.
A metal peg is attached at the centre of one face of the plate and clamped in the lower jaw of the tensometer.

Test Pieces

Sample strips of 25 mm width and minimum length of 175 mm in the machine direction.

Test Conditions

23°C. ± 2°C, 50% RH ± 5% RH. for not less than 4 hours.

Procedure

The sample is formed into a loop with the adhesive side facing outwards. The ends of the loop are clamped into the top jaw of the tensometer, leaving the loop hanging vertically.
The plate is clamped in the lower jaw at right angles to the strip. The sample is lowered and, when full contact is made with the place, the jaws are reversed, lifting the sample.

(c) Shear to Glass - Similar to FINAT Test Method No. 8

Test Equipment

Tensile tester with vertical separation of 3 mm/min.
1 standard FINAT roller.
Glass plate.

Test Pieces

Sample strips of 25 mm width and minimum length of 175 mm in the machine direction.

Test Conditions

23°C. ± 2°C, 50% RH ± 5% RH. for not less than 4 hours.

Procedure

A line is drawn across the plate 25 mm from the edge.
The adhesive coated facing material is placed adhesive side down onto a clean test plate using light finger pressure so that a square of pressure sensitive coated material, 25 mm × 25 mm, is in actual contact with the surface. The square is rolled twice in each direction with the standard FINAT roller at an approximate speed of 200 mm/sec.
The test plate is clamped in the lower jaws of the tensile tester, the free end of the test strip in the upper jaws, and left for a period between 5 and 10 minutes.
The upper jaws are then lifted vertically at a rate of 3 mm/min.

Results

Resistance to shear is then recorded as the maximum force required for the strip to shear from the test plate.

(d) Repetitive Tack

Test Equipment

A Release-O-Matic tester.
This is a device capable of measuring repeated "quick stick".

Procedure

A sample of the coated material is placed on the Release-O-Matic such that the adhesive side is facing upwards, exposing an area of 625 $mm^2$. A brass probe is then brought into contact with the adhesive under a known load and applied for a given time before being removed at a predetermined rate. The probe is then brought back into contact with the adhesive after a set time and the cycle repeated over an infinitely variable number of contacts.

Variables

| | | STANDARD |
|---|---|---|
| 1. | Load applied to the sample. | 175g./625$mm^2$ |
| 2. | Time for which the load is applied. | 4 seconds |
| 3. | Rate of application of release force (scale of 1-10) where 1=0 and 10 = approx. 750mm per min.) | 5 |
| 4. | Time lapse before removing probe. | 4 seconds |
| 5. | Time lapse before reapplying the load | 0.1 seconds |

Results

Repetitive tack is expressed as the average force required to separate the probe from the test adhesive taken over the first 200 contacts where the force is expressed in arbitrary units.

(e) Pressure Transfer Test

Test Equipment

A clamping device consisting of two circular jaws of one inch diameter capable of exerting a pressure of 30 lb/sq inch (2082.5 g/$cm^2$) between the two jaw faces.

Procedure

A piece of adhesive coated paper, 2" × 1", was placed against a second plain piece to form a laminate.
The sample was then clamped at a pressure of 30 lb/sq inch (2082.5 g/$cm^2$) between the two jaws for a period of 24 hours. The laminate was then peeled apart and the percentage of adhesive transfer recorded.

TABLE 4

| | EXAMPLE 1 | | EXAMPLE 1A | | EXAMPLE 1B | EXAMPLE 2 | EXAMPLE3 | EXAMPLE 6 |
|---|---|---|---|---|---|---|---|---|
| Adhesive Coat Weight (gsm): | 7 | 15 | 7 | 15 | 15 | 15 | 15 | 15 |
| LOOP TACK (Newtons) | 0.3 | 0.6 | 0.2 | 0.4 | 0.2 | 0.7 | 0.6 | 2.0 |
| SHEAR (Newtons) | 36 | 50 | 13 | 34 | 13 | 40 | 53 | 28 |
| PEEL FROM GLASS (Newtons): 10 min.<br>1 day<br>1 week<br>1 month | 1.2<br>1.6<br>2.3<br>2.6 | 2.5<br>3.4<br>4.9<br>5.6 | 0.65<br>0.85<br>0.85<br>0.90 | 1.8<br>1.5<br>0.8<br>0.3 | 0.7<br>1.0<br>2.0<br>2.2 | 1.5<br>2.5<br>3.2<br>3.3 | 1.3<br>1.9<br>2.5<br>2.4 | 2.5<br>3.0<br>3.7<br>3.7 |
| PEEL FROM POLYPROPYLENE FILM (Newtons) 10 min.<br>1 day<br>1 week<br>1 month | 1.4<br>2.7<br>3.4<br>4.8 | 2.2<br>5.5<br>6.2<br>6.7 | 0.2<br>0.4<br>1.3<br>1.9 | 0.4<br>0.5<br>1.0<br>1.2 | 0.3<br>0.5<br>1.4<br>1.7 | 1.8<br>3.0<br>6.5<br>4.7 | 1.3<br>2.6<br>3.8<br>4.5 | 2.0<br>2.4<br>2.4<br>2.9 |
| PEEL FROM ALUMINIUM 10 min.<br>1 day<br>1 week<br>1 month | 1.0<br>1.1<br>4.0<br>3.3 | 3.2<br>3.3<br>5.7<br>5.3 | 0.5<br>1.0<br>2.0<br>2.6 | 3.3<br>3.2<br>2.6<br>1.6 | 1.4<br>2.0<br>2.2<br>2.7 | 2.4<br>3.0<br>4.0<br>4.5 | 1.2<br>1.8<br>2.6<br>1.9 | 4.5<br>3.8<br>8.5<br>8.5 |
| EASE OF FINGER RUB-OFF | Difficult | Difficult | Easy | Easy | Easy | Difficult | Very Difficult | Very Difficult |
| PRESSURE TRANSFER | 40% | 40% | 60% | 60% | 60% | 10% | 20% | 20% |

TABLE 5

| | EXAMPLES (COATED ON PVC) | |
|---|---|---|
| | 4 | 4A |
| Coating Weight (gsm): | 15 | 15 |
| TEST | | |
| LOOP TACK (Newtons) | 0.30 | 0.15 |
| 180° PEEL FROM GLASS (N'tons) | 0.45 | 0.35 |
| FINGER RUB-OFF | Difficult | Easy |
| HIGH PRESSURE TRANSFER | No Transfer | 25-50%Transfer |

TABLE 6

| | EXAMPLES Coated on Polypropylene Film | |
|---|---|---|
| | 5 | 5A |
| Coating Weight (gsm): | 15 | 15 |
| TEST | | |
| LOOP TACK (Newtons) | 0.20 | 0.15 |
| 180° PEEL FROM GLASS (N'tons) | 0.32 | 0.25 |
| FINGER RUB-OFF | Very Difficult | Easy |
| HIGH PRESSURE TRANSFER | No Transfer | 25-50%Transfer |

Shear values were unattainable in Tables 5 and 6 due to the deformation of the substrate on pulling.

TABLE 7

RESULTS OF PRESSURE TRANSFER TEST

| | |
|---|---|
| Example 6: | 20% |
| Example 7: | 0-10% |
| Example 8: | 0 |
| Example 9: | 0 |

Advantages of this invention are that the problem of transfer is obviated or mitigated which enables the use of tacky microspheres for applications to which they were previously unsuited, it provides an adhesive which gives excellent adhesion to a wide range of surfaces, but which can be removed even after a considerable period of time without leaving any or negligible amounts of adhesive behind on the surface, and further adhesive coating compositions of higher solids loading can now be made which reduces the problems of curling.

## Claims

1. Infusible, solvent-insoluble, solvent-dispersible, inherently tacky, elastomeric polymeric microspheres having a composition formed from non-ionic monomers alone or together with a proportion of ionic co-monomers characterised in that said composition additionally comprises an agent which remains unreacted during polymerization to form the microspheres and is available for subsequent use in binding the polymerized microspheres through electrostatic interaction or chemical bonding with a substrate or with a suitable binder applied to said substrate wherein said agent is a monomer of the formula $CH_2 = CR^1R^2$ wherein $R^1$ is hydrogen or the group $-CO(CH_2)_n-NH_2$ in which n may be O or a positive whole number and $R^2$ is a substituted or unsunbstituted heterocyclic group containing a quaternizable nitrogen.

2. Microspheres according to claim 1 wherein the heterocyclic group is a pyridyl or quinolyl group.

3. Microspheres according to claim 2 wherein the heterocyclic group is 4-pyridyl.

4. Microspheres according to claim 2 wherein the heterocyclic group is 6-quinolyl.

5. Microspheres according to claim 1 wherein the heterocyclic group is a 4-alkyl pyridyl group or a

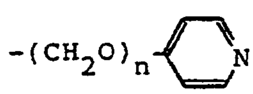 group

6. Microspheres according to any one of the preceding claims wherein the elastomeric polymer comprises at least one alkyl acrylate or methacrylate ester.

7. Microspheres according to claim 6 wherein the elastomeric polymer comprises at least one of 2-ethyl hexyl acrylate, n-butyl acrylate, methyl methacrylate and n-butyl methacrylate.

8. Microspheres according to any one of the preceding claims wherein the elastomeric polymer comprises as ionic comonomer N-(3-sulphopropyl)-N-methacroylamidopropyl-N,N-dimethyl ammonium betaine, 1-(3-sulphopropyl)-2-vinyl-pyridinium betaine or sodium styrene sulphonate.

9. Microspheres according to claim 8 wherein said ionic comonomer comprises from 0.5 to 5% by weight of total monomer content.

10. A process for preparing an adhesive coating composition containing infusible, solvent-insoluble, solvent dispersible, inherently tacky, elastomeric polymeric microspheres as claimed in claim 1 which comprises carrying out a suspension polymerization of suitable non-ionic monomers alone or together with a proportion of ionic monomers characterised in that the polymerization is carried out in the presence of a non-ionic stabilizer which provides the predominant means of providing a stable coating composition wherein the non-ionic stabilizer is a polyvinyl alcohol derivative.

11. A process according to claim 10 wherein the solids content of the composition is in the region of 45% by weight.

12. A process for preparing an adhesive coating composition containing infusible, solvent insoluble, solvent dispersible, inherently tacky, elastomeric polymeric microspheres as claimed in claim 1 which comprises carrying out a suspension polymerization of a reaction mixture having an aqueous phase containing

an anionic or non-ionic stabilizer, and an organic phase containing non-ionic monomers alone or together with a proportion of ionic monomers in an organic solvent characterised in that either (a) a cross-linking agent is added to the adhesive coating composition prior to coating a substrate/binder coated substrate with said composition so that after the adhesive is applied to the substrate and the water and/or solvent is evaporated off the cross-linking reaction takes place or (b) a cross-linking agent is pre-coated onto a substrate in an unactivated state and an activator is added to the adhesive coating composition prior to coating said substrate so that after the adhesive is applied to the substrate and the water and/or a solvent is evaporated off the cross-linking reaction takes place.

13. A process according to claim 12 wherein cross-linking is effected by use of ammonium zirconium carbonate or an aziridine.

14. A process according to claim 10 wherein a carboxylated polymer binder is added to the adhesive coating composition prior to coating of a substrate with said composition.

15. An adhesive composition comprising microspheres as claimed in any one of claims 1 to 9.

16. An article comprising a substrate having a surface coated with an adhesive composition as claimed in claim 15.

17. An article comprising a substrate having a surface to which microspheres according to any one of claims 1 to 9 are firmly attached by electrostatic interaction or chemical bonding with said surface.

18. An article according to claim 17 wherein the substrate is paper, PVC or polyethylene film.

## Ansprüche

1. Umschmelzhare, in Lösungsmitteln unlösliche, in Lösungsmitteln dispergierbare, von sich aus klebende, elastomere Polymermikrokugeln mit einer Zusammensetzung ausschließlich aus nichtionischen Monomeren oder mit einem Anteil von ionischen Comonomeren, dadurch gekennzeichnet, daß die genannte Zusammensetzung zusätzlich ein Mittel enthält, das während der Polymerisation zur Ausformung der Mikrokugeln nicht reagiert und für spätere Anwendung zur Bindung der polymerisierten Mikrokugeln durch elektrostatische Wechselwirkung oder chemische Bindung an ein Substrat oder an ein geeignetes Bindemittel, das auf das genannte Substrat aufgetragen wird, zur Verfügung steht, wobei das genannte Mittel ein Monomer der Formel $CH_2 = CR^1R^2$ ist, in der $R^1$ Wasserstoff oder die Gruppe $-CO(CH_2)n-NH_2$ ist mit n = 0 oder gleich einer positiven ganzen Zahl, und in der R2 eine substituierte oder nicht substituierte, heterozyklische Gruppe ist, die ein Stickstoffatom enthält, das in der Lage ist, quaternär zu sein.

2. Mikrokugeln nach Patentanspruch 1, bei denen die heterozyklische Gruppe eine Pyridyl- oder Chinolylgruppe ist.

3. Mikrokugeln nach Patentanspruch 2, bei denen die heterozyklische Gruppe eine 4-Pyridylgruppe ist.

4. Mikrokugeln nach Patentanspruch 2, bei denen die heterozyklische Gruppe eine 6-Chinolylgruppe ist.

5. Mikrokugeln nach Patentanspruch I, bei denen die heterozyklische Gruppe eine 4-Alkyl-pyridylgruppe oder eine

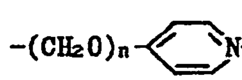-Gruppe ist.

6. Mikrokugeln nach irgendeinem der vorhergehenden patentansprüche, bei denen das elastomere Polymer mindestens ein Alkylakrylat- oder -methakrylatester enthält.

7. Mikrokugeln nach Patentanspruch 6, bei denen das elastomere Polymer mindestens einen Stoff aus der Gruppe 2-Ethyl-hexylakrylat, n-Butylakrylat, Methyl-methakrylat und n-Butylmethakrylat enthält.

8. Mikrokugeln nach irgendeinem der vorhergehenden Patentansprüche, bei denen das elastomere Polymer als ionisches Comonomer N-(3-sulphopropyl)-N-methacroyl- amidopropyl-N,N-dimethylammoniumbetain, 1-(3-sulphopropyl)-2-vinyl-pyridiniumbetain oder Natrium-styrolsulphonat enthält.

9. Mikrokugeln nach Patentanspruch 8, bei denen das genannte ionische Comonomer zwischen 0,5 und 5 Gewichtsprozent des gesamten Monomergehaltes umfaßt.

10. Verfahren zur Herstellung eines Gemisches für Klebebeschichtungen, die umschmelzbare, in Lösungsmitteln unlösliche, in Lösungsmitteln dispergierbare, von sich aus klebende, elastomere Polymermikrokugeln, wie in Patentanspruch 1 beansprucht, enthält, das darin besteht, die Suspensionspolymerisation geeigneter nichtionogener Monomere alleine oder zusammen mit einem Anteil ionischer Monomere durchzuführen, dadurch gekennzeichnet, daß die Polymerisation in Anwesenheit eines nichtionogenen Stabilisators durchgeführt wird, der hauptsächlich dazu dient, für ein stabiles Beschichtungsgemisch zu sorgen, wobei der nichtionogene Stabilisator ein Derivat von Polyvinyl-alkohol ist.

11. Verfahren nach Patentanspruch 10, in dem der Feststoffgehalt des Gemisches in der Größenordnung von 45 Gewichtsprozent liegt.

12. Verfahren zur Herstellung eines Gemisches für Klebebeschichtungen, die umschmelzbare, in Lösungsmitteln unlösliche, in Lösungsmitteln dispergierbare, von sich aus klebende, elastomere Polymermikrokugeln, wie in Patentanspruch 1 beansprucht, enthält, das darin besteht, eine Suspensionspolymerisation eines Reaktionsgemisches mit einer einen anionischen oder nichtionogenen Stabilisator enthaltenden wässrigen Phase und einer nichtionogene Monomere alleine oder zusammen mit einem Anteil an ionischen Monomeren in einem organischen Lösungsmittel enthaltenden, organischen Phase, dadurch gekennzeichnet, daß entweder (a) dem Gemisch für Klebebeschichtungen vor der Beschichtung eines Substrates/mit Bindemittel beschichteten Substrates mit dem genannten Gemisch ein Vernetzungsmittel zugesetzt wird, so daß nach dem Auftragen des Klebers auf das Substrat und nach dem Verdunsten des Wassers und/oder Lösungsmittels die Vernetzungsreaktion stattfindet oder (b) ein Vernetzungsmittel in nichtaktiviertem Zustand auf ein Substrat aufgetragen und dem Gemisch für Klebebeschichtungen vor der Beschichtung des genannten Substrates ein Aktivator zugesetzt wird, so daß nach Auftragen des Klebers auf das Substrat und nach dem Verdunsten des Wassers und/oder Lösungsmittels die Vernetzungsreaktion stattfindet.

13. Verfahren nach Patentanspruch 12, in dem eine Vernetzung durch Anwendung von Ammoniumzirkonkarbonat oder von Aziridinen ausgeführt wird.

14. Verfahren nach Patentanspruch 10, in dem dem Gemisch für Klebebeschichtungen vor Beschichtung eines Substrates mit dem genannten Gemisch ein karboxyliertes, polymerisiertes Bindemittel zugesetzt wird.

15. Klebergemisch, das Mikrokugeln, wie in irgendeinem der Patentansprüche 1 bis 9 beansprucht, enthält.

16. Produkt, das ein Substrat enthält, das eine mit dem Klebergemisch, wie in Patentanspruch 15 beansprucht, beschichtete Oberfläche aufweist.

17. Produkt, das ein Substrat enthält, das eine Oberfläche aufweist, mit der Mikrokugeln nach irgendeinem der Patentansprüche 1 bis 9 durch elektrostatische Wechselwirkung oder chemische Bindung fest verbunden sind.

18. Produkt nach Patentanspruch 17, bei dem das Substrat Papier, PVC oder Polyethylenfilm ist.

**Revendications**

1. Microsphères de polymère elastomère, infusibles, insolubles dans les solvants, dispersibles dans les solvants, collants par nature, ayant une composition formée à partir de monomères non-ioniques seuls ou conjointement avec une proportion de comonomères ioniques, caractérisées par le fait que ladite composition comprend en outre un agent qui ne réagit pas pendant la polymérisation pour former les microsphères et qui est disponible pour une utilisation ultérieure pour lier les microsphères polymérisées, par l'intermédiaire d'une interaction électrostatique ou d'une liaison chimique, avec un substrat ou avec un liant approprié appliqué sur ledit substrat, où ledit agent est un monomère de formule $CH_2 = CR^1R^2$, dans laquelle $R^1$ représente hydrogène ou le groupe $-CO(CH_2)n-NH_2$, où n peut valoir 0 ou être un nombre entier positif, et $R^2$ représente un groupe hétérocyclique, substitué ou non-substitué, contenant un atome d'azote quaternisable.

2. Microsphères selon la revendication 1, dans lesquelles le groupe hétérocyclique est un groupe pyridyle ou quinolyle.

3. Microsphères selon la revendication 2, dans lesquelles le groupe hétérocyclique est le groupe pyridyle-4.

4. Microsphères selon la revendication 2, dans lesquelles le groupe hétérocyclique est le groupe quinolyle-6.

5. Microsphères selon la revendication 1, dans lesquelles le groupe hétérocyclique est un groupe alkyl-4 pyridyle ou un groupe

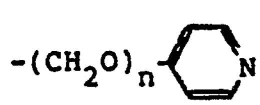

6. Microsphères selon l'une quelconque des revendications précédentes, dans lesquelles le polymère

élastomère comprend au moins un ester acrylate ou méthacrylate d'alkyle.

7. Microsphères selon la revendication 6, dans lesquelles le polymère elastomère comprend au moins l'un parmi l'acrylate d'éthyl-2 hexyle, l'acrylate de n-butyle, le méthacrylate de méthyle et le méthacrylate de n-butyle.

8. Microsphères selon l'une quelconque des revendications précédentes, dans lesquelles le polymère élastomère comprend, en tant que comonomère ionique, la N-(sulfo-3 propyl)-N-méthacroylamidopropyl-N-N-diméthyl ammonium bétaïne, la (sulfo-3 propyl)-1 vinyl-2 pyridinium bétaïne ou le styrène sulfonate de sodium.

9. Microsphères selon la revendication 8, dans lesquelles ledit comononère ionique représente de 0,5 à 5% en poids de la teneur totale en monomères.

10. Procédé de fabrication d'une composition de revêtement adhésive contenant des microsphères de polymère élastomère, infusibles, insolubles dans les solvants, dispersibles dans les solvants, collants par nature, telles que définies à la revendication 1, qui comprend l'étape consistant à effectuer une polymérisation en suspension de monomères non-ioniques appropriés seuls ou conjointement avec une proportion de monomères ioniques, caractérisé par le fait qu'on effectue la polymérisation en présence d'un stabilisateur non-ionique qui fournit le moyen prédominant pour obtenir une composition de revêtement stable, le stabilisateur non-ionique étant un dérivé d'alcool polyvinylique.

11. Procédé selon la revendication 10, dans lequel la teneur en matières solides de la composition se situe aux alentours de 45% en poids.

12. Procédé de fabrication d'une composition de revêtement adhésive contenant des microsphères de polymère élastomère, infusibles, insolubles dans les solvants, dispersibles dans les solvants, collants par nature, telles que définies à la revendication 1, qui comprend l'étape consistant à effectuer une polymérisation en suspension d'un mélange réactionnel ayant une phase aqueuse contenant un stabilisateur anionique ou non-ionique, et une phase organique contenant des monomères non-ioniques seuls ou conjointement avec une proportion de monomères ioniques dans un solvant organique, caractérisé par le fait que, (a) soit on ajoute un agent de réticulation à la composition de revêtement adhésive avant de revêtir avec ladite composition un substrat/substrat revêtu d'un liant, de sorte qu'après que l'adhésif est appliqué sur le substrat et que l'eau et/ou le solvant est (ou sont) éliminé(s) par évaporation, la réaction de réticulation a lieu, (b) soit on revêt au préalable avec un agent de réticulation un substrat dans un état non-activé et on ajoute un activateur à la composition de revêtement adhésive avant de revêtir ledit substrat, de sorte qu'après que l'adhésif est appliqué sur le substrat et que l'eau et/ou le solvant est (ou sont) éliminé(s) par évaporation, la réaction de réticulation a lieu.

13. Procédé selon la revendication 12, dans lequel on effectue la réticulation à l'aide de carbonate d'ammonium zirconium ou d'une aziridine.

14. Procédé selon la revendication 10, dans lequel on ajoute un liant polymère carboxylé à la composition de revêtement adhésive avant de revêtir un substrat avec ladite composition.

15. Composition adhésive comprenant des microsphères telles que définies à l'une quelconque des revendications 1 à 9.

16. Article comprenant un substrat ayant une surface revêtue d'une composition adhésive telle que définie à la revendication 15.

17. Article comprenant un substrat ayant une surface sur laquelle des microsphères selon l'une quelconque des revendications 1 à 9 sont fixées solidement par interaction électrostatique ou liaison chimique.

18. Article selon la revendication 17, dans lequel le substrat est du papier, du PVC ou un film de polyéthylène.